# EUROPEAN PATENT APPLICATION

(11) **EP 3 203 345 A1**
(43) Date of publication of application: **09.08.2017**
(21) Application number: 16153767.5
(22) Date of filing: 02.02.2016
(51) Int. Cl.: G05D 7/01, F16K 47/08, F24D 19/10

(54) **VALVE, IN PARTICULAR HEAT EXCHANGER VALVE**

(71) Applicant: Danfoss A/S, 6430 Nordborg (DK)
(72) Inventor: Sigurdsson, Haraldur, 8240 Risskov (DK); Hølck, Poul, 8300 Odder (DK)
(74) Representative: Knoblauch, Andreas

(57) **Abstract**

A valve, in particular heat exchanger valve, is described comprising a housing having a first port (3), a second port and a flow path between said first port (3) and said second port, a valve seat (5) located in said flow path and having a valve seat axis, a valve element (7) cooperating with said valve seat, and a dynamic unit (9).

Such a valve should allow for a precise presetting.

To this end said dynamic unit (9) comprise a dynamic valve element (10) which is arranged between a first spring (20) and a second spring (21).

## Description

The present invention relates to a valve, in particular a heat exchanger valve, comprising a housing having a first port, a second port, and a flow path between said first port and said second port, a valve seat located in said flow path and having a valve seat axis, a valve element cooperating with said valve seat, and a dynamic unit.

The present invention is illustrated with help of a radiator valve which is an example for a valve and more specifically an example for a heat exchanger valve. However, the invention is not limited to a heat exchanger valve.

The dynamic unit secures a maximum flow over the valve regardless of the inlet pressure. The dynamic unit forms a kind of flow limiter securing an inlet pressure independent maximum flow. The inlet pressure is trying to close the dynamic unit against a spring, and the pressure working between the dynamic unit and the main valve formed by the valve seat and the valve element is trying to open the dynamic unit. "Closing" and "opening" of the dynamic unit means that the throttling resistance of the dynamic unit is increased or decreased.

The object underlying the present invention is to allow for a precisely controlled behavior of the dynamic unit.

This object is solved with a valve as described at the outside in that said dynamic unit comprises a dynamic valve element which is arranged between a first spring and a second spring.

The dynamic valve element according to the present invention is now controlled by the action of two springs. The position of the dynamic valve element depends on the forces which are generated by the first spring on the one hand and the second spring on the other hand. With the use of two springs a stabilizing effect can be achieved. The use of only one spring means that the associated valve element is in a pretension state. This again means that it is necessary to overcome a certain force or pressure before the valve element will move. This is not the case with two springs. When the dynamic valve element is arranged between two springs and these two springs have the same spring constants then it is always the same pressure which can move the dynamic valve element for a certain distance, e.g. 1 mm which is not the case with only one spring. This effect again gives a more precise regulation. The same is true when the two springs do not have the same spring constants. In this case, a displacement over pressure changes a bit. If two springs with progressive spring constants are used, this could be used to have the one spring "responsible" for one pressure area and the other spring "responsible" for a second pressure area.

In a preferred embodiment said first spring and said second spring act in opposite directions onto said dynamic valve element. In other words, the dynamic valve element is clamped between the first spring and the second spring. The two springs automatically generate restoring forces. The dynamic valve element moves into a position in which the forces of the first spring and the second spring, respectively, are in an equilibrium.

In a preferred embodiment said dynamic valve element is displaceable parallel to said valve seat axis. In other words, said dynamic valve element can be moved towards to and away from the valve seat. Such a linear displacement can be used for a precise adjustment of the position of the dynamic valve element consequently for a precise adjustment of the pressure drop over the dynamic unit.

Preferably said housing comprises an inner thread, a drive element having an outer thread being threaded into said outer thread, said first spring being located between said dynamic valve element and said drive element, upon rotation said drive element changing a compression of said first spring. The inner thread and the outer thread form a gear having a rather low gear transmission ratio. When the drive element is rotated by a predetermined angle, the corresponding displacement of the drive element is rather small. Consequently, the change in compression of the first spring is small as well and therefore the displacement of the dynamic valve element is rather small as well. However, another gear transmission ratio can be used as well. Since the dynamic valve element is arranged between the first spring and the second spring, the axial movement of the drive element compresses not only the first spring but also the second spring and the dynamic valve element moves in a new position in which the forces of the first spring and of the second spring are in an equilibrium. The new position of the dynamic valve element causes another pressure drop over the dynamic unit.

Preferably said valve seat is formed at a valve seat member which is rotatably mounted in said housing and is fixed through said drive element in rotational direction. By rotating the valve seat member the drive element is rotated as well and consequently moved in axial direction related to the valve seat axis.

Preferably said second spring is located between said dynamic valve element and a stop in said housing. The housing is used to create a fixed position defining the end position of the second spring. The combination of first spring and second spring is in this case located between the drive element and the housing.

In a preferred embodiment said stop forms a guide for said dynamic valve element. The dynamic valve element is therefore held in a predefined radial position, which is preferably a centered position.

Preferably said dynamic valve element is guided by said drive element in a direction parallel to said valve seat axis. The drive element is used as guide as well. When the stop and the drive element are used together to guide the dynamic valve element, the alignment of the dynamic valve element with the valve seat axis can be kept with a rather high precision independently of lateral or radial forces which could be created by the flow of fluid or by a slight misalignment of the first spring and/or the second spring.

In a preferred embodiment said dynamic valve element together with a counter element form a throttle opening the size of which is changed upon displacement of said dynamic valve element. When the dynamic valve element is moved towards to or away from the counter element, a free flow area defined by the throttle opening is increased or decreased, depending on the direction of displacement.

Preferably said counter element is part of said drive element. In this case the size of the throttle opening is determined by the position of the dynamic valve element relative to the drive element.

In another preferred embodiment said counter element is part of said housing. In this case the size of the throttle opening is determined by the position of the dynamic valve element within the housing.

In both cases it is preferred that said counter element is in form of a ring-like protrusion protruding radially inwardly in a direction towards said dynamic valve element. Such a protrusion is a rather simple construction.

Preferably said dynamic valve element comprises a ring-shaped wall having at least one opening. The wall penetrates more or less through the opening defined by said counter element. The counter element, more precisely the side of the counter element facing away from the valve seat, more or less covers the opening. When the dynamic valve element is displaced away from the valve seat, the effective size of the opening can be increased, for example, and when the dynamic valve element is displaced towards the valve seat, the effective size of the opening is decreased.

In this case it is preferred that said opening comprises a width in circumferential direction, said width varying along said valve seat axis. For example, the width of the opening at the end facing away from the valve seat can be smaller than the width at the opposite end, i.e. at the end facing towards said valve seat. This allows for a very precise adjustment of the pressure drop, in particular in a low flow area.

Preferably said wall comprises an outer diameter corresponding to an inner diameter of said counter element. In this way the flow resistance created by the dynamic valve element and the counter element is basically defined by the effective size of the opening. There is only a small gap between the wall and the counter element in a region out of the opening in circumferential direction. This gap is necessary to allow for a displacement of the dynamic valve element. However, this gap allows only a small leakage to pass and does not really influence the flow resistance.

Preferred embodiments of the invention will now be described in more detail with reference to the drawing, wherein:
- Fig. 1: is a sectional view of a first embodiment,
- Fig. 2: is an enlarged view of detail II of Fig. 1,
- Fig. 3: is a sectional view of a second embodiment of the invention, and
- Fig. 4: is an enlarged view of detail IV of Fig. 3.

In all figures same elements are designated with the same reference numerals.

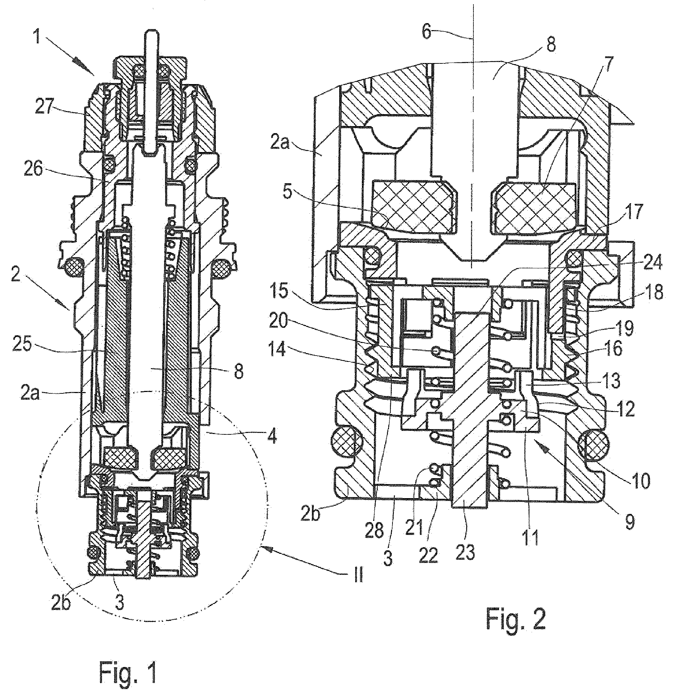

Fig. 1 and 2 show a first embodiment of a valve 1 which is in this case a heat exchanger valve, more precisely a radiator valve.

Valve 1 comprises a housing 2 having an upper part 2a and a lower part 2b. Housing 2 comprises a first port 3 and a second port 4. In the present embodiment first port 3 is used as inlet and second port 4 is used as outlet. Valve seat 5 is located in the flow path between the first port 3 and the second port 4. Valve seat 5 comprises a valve seat axis 6.

A valve element 7 cooperates with the valve seat 5. In other words, the flow through the valve 1 is determined by a distance between the valve element 7 and the valve seat 5. Valve element 7 is driven by means of a valve stem 8.

A dynamic unit 9 is arranged between said first port 3 and said valve seat 5.

The dynamic unit 9 comprises a dynamic valve element 10. Dynamic valve element 10 can be displaced in a direction parallel to the valve seat axis 6, i.e. towards said valve seat 5 or away from said valve seat 5. Dynamic valve element 10 comprises a base 11 and a wall 12 extending from said base 11 in a direction towards said valve seat 5. A number of openings 13 are distributed in circumferential direction in said wall 12.

The housing 2, more precisely the lower housing part 2b, comprises an inner thread 14. A drive element 15 comprising an outer thread 16 which is threaded into inner thread 14. The inner thread 14 of the housing and the outer thread 16 of the drive element 15 are in threaded engagement to each other.

The valve seat 5 is formed at a valve seat member 17. Valve seat member 17 is rotatably mounted in housing 2. Valve seat member 17 is rotatably fixed to said drive element 15. However, the drive element 15 can be displaced in a direction parallel to the valve seat axis 6 relative to said valve seat member 17. To this end valve seat member 17 comprises a protrusion 18 extending in a direction parallel to said valve seat axis 6 and being inserted into a corresponding opening 19 in drive element 15.

Fig. 2 shows only one protrusion 18. However, it is clear that a plurality of protrusions 18 can be provided which are distributed in circumferential direction.

A first spring 20 is located between said drive element 15 and said dynamic valve element 10. A second spring 21 is located between said dynamic valve element 10 and a stop 22 in the housing 2, more precisely in the lower housing part 2b.

Dynamic valve element 10 has a first stem 23 and a second stem 24. First stem 23 is guided in said stop 22, i.e. stop 22 forms a guide for the dynamic valve element 10 and holds it centered with respect to the valve seat 5. The second stem 24 of the dynamic valve element 10 is guided by the drive element 15 in a direction parallel to the valve seat axis 6.

The first spring 20 and the second spring 21 act in opposite direction onto said dynamic valve element 10. Dynamic valve element 10 assumes a position in which the forces of the first spring 20 and of the second spring 21 are in an equilibrium. First spring 20 and second spring 21 are, in this embodiment, compression springs.

The position of the dynamic valve element 10 and the pretension of the first spring 20 and the second spring 21 are adjusted by rotating valve seat member 17. This rotation can be caused by rotating a valve insert 25 which is connected by means of connecting means 26 with a ring 27 on top of housing 2 which is accessible from the outside.

When the valve seat member 17 is rotated, drive element 15 is rotated as well. Because of the pairing between inner thread 14 and outer thread 16 this rotation causes a linear displacement of the drive element 15 away from or towards to the valve seat 5 depending on the direction of rotation of the valve seat member 17. Because of the transmission ratio of the thread pairing 14, 16 the displacement movement of the drive element 15 is, for a given angle of rotation, comparatively small. Translational movement of drive element 15 away from the valve seat member 17 causes a compression of the first spring 20. This compression generates a force on the dynamic valve element 10 displacing dynamic valve element 10 away from the valve seat member 17. However, this displacement of dynamic valve element 10 compresses the second spring 21. The displacement continues therefore only to a position in which the forces of the first spring 20 and of the second spring 21 are again in an equilibrium.

The dynamic valve element 10 forms a presetting opening together with a ring-like protrusion 28 which extends radially inwardly in a direction towards said dynamic valve element 10. This protrusion 28 forms a counter element. The ring-like protrusion 28 is part of the drive element 15. Preferably it is made integral with drive element 15.

The size of the presetting opening is in this case determined by the position of the dynamic valve element 10 relative to the drive element 15.

The protrusion 28, precisely the side of the protrusion 28 facing away from the valve seat member 17, together with the wall 12 and the base 11 of the dynamic valve element 10 limits the effective size of the opening 13, i.e. the effective area available for the flow through the valve 1.

The opening 13 has a width in circumferential direction varying along the valve seat axis 6. In a preferred embodiment the width is smaller near the base 11 and larger at the side of the wall 12 facing the valve seat member 17. In this way a rather high precision of the adjustment of a presetting can be achieved, in particular in a low flow area.

The inner diameter of protrusion 28 corresponds to the outer diameter of wall 12. Although there must be a small gap between the wall 12 and the protrusion 28 to allow for a friction free movement of the dynamic valve element. This small gap is not essential for the flow resistance. The flow resistance is basically determined by the effective size of the opening 13.

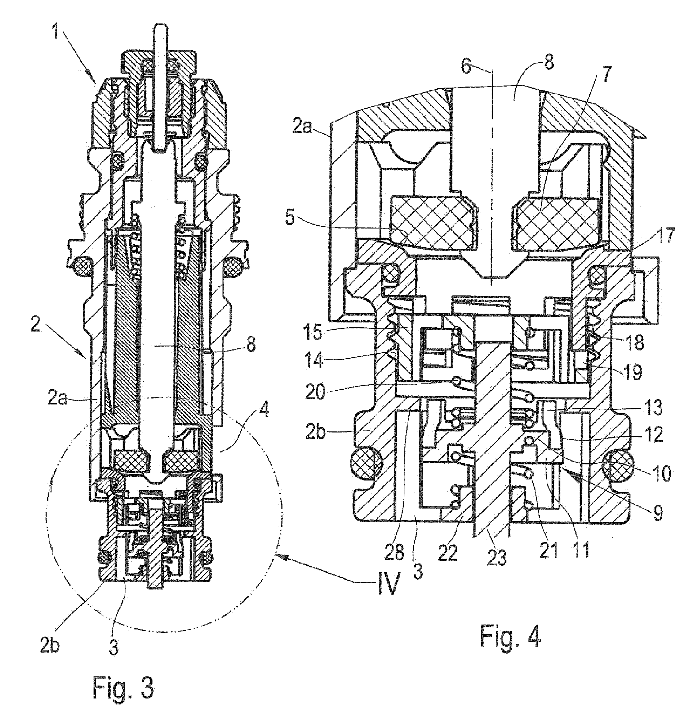

Fig. 3 and 4 show another embodiment of a valve 1, in which the same elements are designated by the same reference numerals.

The only difference between the embodiment shown in Fig. 1 and 2 and the embodiment shown in Fig. 3 and 4 is that the protrusion 28 is now part of the housing 2, more precisely the lower housing part 2b.

In this case the size of the presetting opening is determined by the position of the dynamic valve element 10 within the housing 2, i.e. by the distance between the base 11 and the protrusion 28 in the housing 2.

The pressure at the first port 3 acts on the dynamic valve element 10. When fluid flows through opening 13 there is a pressure drop because of the throttling behavior of opening 13. The pressure downstream the dynamic valve element 10 is therefore lower than the pressure upstream said dynamic valve element 10. This has the effect that the dynamic valve element 10 is moved in a direction towards valve seat member 17. The first spring 20 is compressed and the second spring 21 is enlarged. The movement or displacement of the dynamic valve element 10 continues until the forces generated by the two springs 20, 21 and the force generated by the pressure difference are again in an equilibrium.

The force generated by the pressure difference over opening 13 on the dynamic valve element 10 corresponds to the combined forces of the first spring 20 and the second spring 21.

When the drive element 15 is rotated and in this way displaced away from valve seat member 17 or displaced towards valve seat member 17, the compression state of the two springs 20, 21 is changed and therefore the pressure drop of opening 13 is changed as well.

The dynamic valve element 10, the drive element 15, the valve seat member 17 and the lower housing part 2b can be made of plastic material. They can be formed, for example, by injection molding.

In the dynamic unit 9 the inlet pressure is trying to close the dynamic unit, i.e. to move the dynamic valve element 10 into the counter element, and the pressure working between the dynamic unit 9 and the valve seat member 17 is trying to open the valve. The dynamic unit 9 is fully open, when the main valve is closed, i.e. the valve element 7 is close to the valve seat 5. The pressure working between the dynamic unit 9 and the main valve is in principle only used for "indicating" when the dynamic unit 9 should start operating.

When the valve element 7 has the largest distance to valve seat 5 the pressure between the valve seat 5 and the dynamic unit 9 can be regarded as negligible and this starts the dynamic unit 9 and the regulation or flow limitation is now only a "fight" between the pressure at the inlet and the combined force of springs 20, 21.

## Claims

1. Valve (1), in particular heat exchanger valve, comprising a housing (2) having a first port (3), a second port (4), and a flow path between said first port (3) and said second port (4), a valve seat (5) located in said flow path and having a valve seat axis (6), a valve element (7) cooperating with said valve seat (5), and a dynamic unit (9), **characterized in that** said dynamic unit (9) comprise a dynamic valve element (10) which is arranged between a first spring (20) and a second spring (21).

2. Valve according to claim 1, **characterized in that** said first spring (20) and said second spring (21) act in opposite directions onto said dynamic valve element (10).

3. Valve according to claim 1 or 2, **characterized in that** said dynamic valve element (10) is displaceable parallel to said valve seat axis (6).

4. Valve according to any of claims 1 to 3, **characterized in that** said housing (2) comprises an inner thread (14), a drive element (15) having an outer thread (16) being threaded into said inner thread (14), said first spring (20) being located between said dynamic valve element (10) and said drive element (15), upon rotation said drive element (15) changing a compression of said first spring (20).

5. Valve according to claim 4, **characterized in that** said valve seat (5) is formed at a valve seat member (17) which is rotatably mounted in said housing (2) and is fixed to said drive element (15) in rotational direction.

6. Valve according to any of claims 1 to 5, **characterized in that** said second spring (21) is located between said dynamic valve element (10) and a stop (21) in said housing.

7. Valve according to claim 6, **characterized in that** said stop (21) forms a guide for said dynamic valve element (10).

8. Valve according to any of claims 4 to 7, **characterized in that** said dynamic valve element (10) is guided by said drive element (15) in a direction parallel to said valve seat axis (6).

9. Valve according to any of claims 1 to 8, **characterized in that** said dynamic valve element (10) together with a counter element form a throttle opening the size of which is changed upon displacement of said dynamic valve element (10).

10. Valve according to claim 9, **characterized in that** said counter element is part of said drive element (15).

11. Valve according to claim 8, **characterized in that** said counter element is part of said housing (2).

12. Valve according to claim 10 or 11, **characterized in that** said counter element is in form of a ring-like protrusion (28) protruding radially inwardly in a direction towards said dynamic valve element (10).

13. Valve according to any of claims 9 to 12, **characterized in that** said dynamic valve element (10) comprises a ring-shaped wall (12) having at least one opening (13).

14. Valve according to claim 13, **characterized in that** said opening (13) comprises a width in circumferential direction, said width varying along said valve seat axis (6).

15. Valve according to any of claims 13 to 14, **characterized in that** said wall (12) comprises an outer diameter corresponding to an inner diameter of said counter element.
